(19) Europäisches Patentamt
European Patent Office
Office européen des brevets

(11) EP 2 236 525 A1

(12) **EUROPEAN PATENT APPLICATION**
published in accordance with Art. 153(4) EPC

(43) Date of publication:
**06.10.2010 Bulletin 2010/40**

(21) Application number: **09703485.4**

(22) Date of filing: **14.01.2009**

(51) Int Cl.:
***C08F 2/00*** *(2006.01)* ***C08G 8/08*** *(2006.01)*

(86) International application number:
**PCT/JP2009/050343**

(87) International publication number:
**WO 2009/093502 (30.07.2009 Gazette 2009/31)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.01.2008 JP 2008011829**

(71) Applicant: **Shin-Etsu Chemical Co., Ltd.**
**Tokyo 100-0004 (JP)**

(72) Inventors:
- **WATANABE, Mikio**
**Kamisu-shi**
**Ibaraki 314-0102 (JP)**
- **AMANO, Tadashi**
**Kamisu-shi**
**Ibaraki 314-0102 (JP)**

(74) Representative: **von Füner, Nicolai**
**Von Füner Ebbinghaus Finck Hano**
**Patentanwälte**
**Mariahilfplatz 3**
**81541 München (DE)**

# (54) POLYMER SCALE DEPOSITION INHIBITOR AND PROCESS FOR PRODUCING POLYMER WITH THE SAME

(57) Provided is a polymer scale adhesion preventive agent for use in the polymerization of a monomer having an ethylenic double bond, the polymer scale adhesion preventive agent including: (A) a condensation reaction product of an aldehyde compound and a hydroxynaphthalene-based compound, and (B) (B1) an organophosphoric acid compound, or (B2) an inorganic phosphoric acid compound having 3 or more phosphorus atoms, or a combination thereof. According to the present invention, a scale preventive coating having satisfactory scale adhesion prevention performance can be formed with a high degree of productivity via a single-stage application. Further, even if a multitude of polymerization batches are repeated under high-temperature polymerization reaction conditions, the adhesion of polymer scale to the inner wall surfaces and the like of the polymerization vessel can be effectively prevented. Moreover, because the thickness of the scale preventive agent layer can be suppressed to not more than 0.2 mm, problems such as a deterioration in the heat removal capabilities of the polymerization vessel jacket, or the problem in which detached portions of the scale preventive agent layer becoming incorporated within the polymer product, causing colored foreign matter, can be suppressed, meaning a polymer product of improved quality can be obtained.

[Fig. 2]

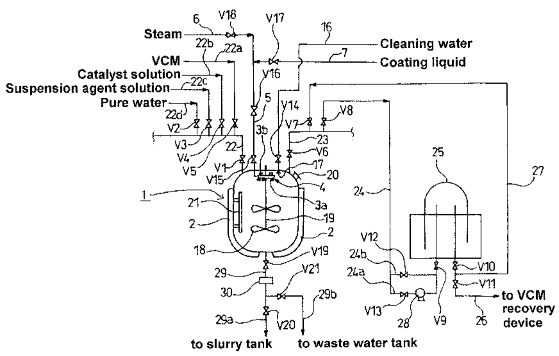




Printed by Jouve, 75001 PARIS (FR)

## Description

### Technical Field

The present invention relates to a polymer scale adhesion preventive agent that prevents the adhesion of polymer scale to the inner wall surfaces and the like of a polymerization vessel when a monomer having an ethylenic double bond is polymerized within the polymerization vessel to produce a polymer, as well as a method of producing a polymer that uses the polymer scale adhesion preventive agent.

### Background Art

It is already known that when a monomer having an ethylenic double bond is polymerized, the polymer adheres to the inner wall surfaces and the like of the polymerization vessel as scale.
This adhesion of polymer scale becomes more marked as the number of polymerization batches increases, and causes reductions in the polymer yield and the cooling capabilities and the like within the polymerization vessel. Further, another problem arises in that polymer scale that has detached from the polymerization vessel inner wall surfaces and the like becomes incorporated within the resulting polymer, causing a deterioration in the product quality. The operation of removing polymer scale that has adhered to the inner wall surfaces and the like of the polymerization vessel not only requires a great deal of time and effort, but is also dangerous, as unreacted monomer incorporated within the polymer scale can harm the human body.
Conventionally, in order to prevent the adhesion of polymer scale to the inner wall surfaces and the like of the polymerization vessel during the polymerization of a monomer having an ethylenic double bond, a method is used in which a polymer scale adhesion preventive agent (hereafter also referred to as a "scale preventive agent") is applied to the polymerization vessel inner wall surfaces and the stirrer and the like to form a coating. Known examples of this polymer scale adhesion preventive agent include mixtures of a condensation reaction product of a naphthol and an aldehyde compound, with an inorganic colloid (and an additional water-soluble polymer compound) (Patent Document 1), and mixtures of a reaction product of sodium hydroxymethanesulfinate and a naphthol, with a polyvinyl alcohol (Patent Document 2, Patent Document 3).
However, it has become clear that a polymer scale adhesion preventive coating formed, for example, using a polymer scale adhesion preventive agent disclosed in the above Patent Document 1 does not provide a satisfactory polymer scale adhesion prevention effect in the vicinity of the gas-liquid interface inside the polymerization vessel, particularly in those cases where the polymerization reaction is conducted at a polymerization temperature of approximately 60°C or higher. Moreover, if the number of polymerization batches reaches a value of approximately 150 batches or more, then a problem arises in that the polymer scale adhered in the vicinity of the gas-liquid interface begins to grow, and as the extent of that growth increases, the scale eventually detaches and becomes incorporated within the obtained polymer, causing fish eyes within the polymer product.
Generally, the scale preventive agent is reapplied to the inner wall surfaces and the like of the polymerization vessel following the completion of each batch, but conventionally, as the number of polymerization batch repetitions increases, the repeated application of the polymer scale adhesion preventive agent to the polymerization vessel inner surfaces and the like results in a gradual thickening of the scale preventive agent layer, and this layer may partially detach and become incorporated within the resulting polymer, causing discoloration problems such as the appearance of colored foreign particles within the polymer product, or yellowing of the product following molding. This phenomenon is called initial discoloration.
In particular, if the repetition number of polymerization batches exceeds approximately 900 batches, then in extreme cases the scale preventive agent layer may reach a thickness of approximately 1.0 mm or more, and not only do detached portions of the scale preventive agent layer become incorporated within the polymer product, causing colored foreign matter, but other problems also arise, such as a deterioration in the heat removal capabilities of the polymerization vessel jacket.
Patent Document 1: Japanese Laid-open publication (kokai) No. Hei 6-206909
Patent Document 2: Japanese Laid-open publication (kokai) No. Hei 11-506495
Patent Document 3: Japanese Laid-open publication (kokai) No. Hei 11-511495

### Disclosure of Invention

### Problems Invention Aims to Solve

An object of the present invention is to provide a polymer scale adhesion preventive agent for use in the production of a polymer by polymerizing a monomer having an ethylenic double bond, wherein a polymer scale adhesion

preventive coating (hereafter referred to as a "scale preventive coating") can be formed on the inner wall surfaces and the like of the polymerization vessel via a single-stage application, thereby enabling an improvement in productivity.
Furthermore, another object of the present invention is to provide a polymer scale adhesion preventive agent that forms a scale preventive coating that exhibits a satisfactory polymer scale adhesion prevention effect even for a polymerization reaction conducted at a high temperature of approximately 60°C or higher.
Moreover, another object of the present invention is to provide a polymer scale adhesion preventive agent that can improve the quality of the polymer product. The expression "improve the quality of the polymer product" means, specifically, that even if the number of polymerization batches exceeds 900 batches, the thickness of the scale preventive coating can be suppressed to not more than 0.2 mm, and therefore problems such as a deterioration in the heat removal capabilities of the polymerization vessel jacket, or the problem wherein detached portions of the scale preventive coating becoming incorporated within the polymer product, causing colored foreign matter, can be suppressed. Furthermore, the expression also means that incorporation of detached scale and colored particles within the obtained polymer product is reduced, and as a result, the occurrence of fish eyes and initial discoloration can be reduced dramatically.

Means for Solution of the Problems

As a result of intensive investigation aimed at achieving the above objects, the inventors of the present invention were able to complete the present invention.
In other words, a first aspect of the present invention provides a polymer scale adhesion preventive agent for use in the polymerization of a monomer having an ethylenic double bond, the polymer scale adhesion preventive agent comprising:

(A) a condensation reaction product of an aldehyde compound and a hydroxynaphthalene-based compound, and
(B) an organophosphoric acid compound, or an inorganic phosphoric acid compound having 3 or more phosphorus atoms, or a combination thereof.

A second aspect of the present invention provides a method of producing a polymer of a monomer having an ethylenic unsaturated double bond, the method in which the monomer is polymerized inside a polymerization vessel having a scale preventive coating formed on the inner wall surfaces and on portions that contact the monomer during polymerization, wherein the scale preventive coating comprises the scale preventive agent described above.

Effects of Invention

The scale preventive agent of the present invention is capable of forming a scale preventive coating having satisfactory scale adhesion prevention performance via a single-stage application, enabling a shortening of the process time and an improvement in the productivity, and even if a multitude of polymerization batches are repeated under high-temperature polymerization reaction conditions, the adhesion of polymer scale can be effectively prevented, not only on the wall surfaces within the liquid phase region inside the polymerization vessel, but also in the vicinity of the gas-liquid interface, on the stirring device, and on the baffle surfaces that oppose the wall surfaces. As a result, not only can the incorporation of colored particles within the polymer be reduced dramatically in comparison with conventional agents, but molded products formed by molding the polymer into sheets or the like have extremely small numbers of fish eyes and exhibit excellent anti-initial discoloration, meaning polymer products of improved quality can be obtained.
Moreover, even if the number of polymerization batches exceeds 900, the thickness of the scale preventive coating can be suppressed to not more than 0.2 mm, and therefore problems such as a deterioration in the heat removal capabilities of the polymerization vessel jacket, or the problem wherein detached portions of the scale preventive coating becoming incorporated within the polymer product, causing colored foreign matter, can be suppressed.

Brief Description of the Drawings

[FIG. 1] A diagram illustrating an outline of an apparatus used in forming a scale preventive coating using a scale preventive agent of the present invention.
[FIG. 2] A diagram illustrating an outline of a polymerization apparatus used in examples for executing a polymerization method that uses a scale preventive agent of the present invention.

Description of the Reference Symbols

1. Polymerization vessel
2. Jacket
4. Application ring
6. Steam supply line
7. Coating liquid supply line
16. Cleaning water supply line
18. Stirring blade
21. Baffle
22. Raw material supply line
23. Evacuating and monomer recovery line
25. Gas holder
30. Filter

Best Mode of Carrying Out Invention

The present invention is described in detail below. In this description, the term "initial discoloration" describes discoloration that occurs when a plasticizer is added to a polymer product and the product is molded under heat and pressure, and the term "anti-initial discoloration" describes resistance to this type of initial discoloration.

[(A) Condensation reaction product]

The component (A) mentioned above is a condensation reaction product obtained by subjecting an aldehyde compound and a hydroxynaphthalene-based compound to a condensation reaction in the presence of a solvent.
The condensation reaction that yields the component (A) is described in detail below.

<Aldehyde compound>

There are no particular restrictions on the aldehyde compound that represents a reaction raw material for the component (A), provided it is an organic compound having an aldehyde group (-CHO). Examples of this aldehyde compound include formaldehyde, acetaldehyde, propionaldehyde, butyraldehyde, acrolein, crotonaldehyde, benzaldehyde, furfural, phenylacetaldehyde, 3-phenylpropionaldehyde and 2-phenylpropionaldehyde. These may be used individually or in combinations of two or more.
Of the aldehyde compounds listed above, formaldehyde and acetaldehyde are preferred from industrial and economic viewpoints.

<Hydroxynaphthalene-based compound>

There are no particular restrictions on the hydroxynaphthalene-based compound that represents a reaction raw material for the component (A), provided it is an organic compound having a naphthalene ring backbone in which at least one of the hydrogen atoms bonded to the carbon atoms that form the backbone has been substituted with a hydroxyl group. Examples of this hydroxynaphthalene-based compound include 1-naphthol, 2-naphthol, 1,3-dihydroxynaphthalene, 1,5-dihydroxynaphthalene, 1,7-dihydroxynaphthalene, 6-hydroxy-2-naphthoic acid, 2-hydroxy-1-naphthoic acid, 1-hydroxy-2-naphthoic acid and 8-hydroxy-1-naphthoic acid. These may be used individually or in combinations of two or more.
Of the hydroxynaphthalene-based compounds listed above, 1-naphthol and 2-naphthol are preferred.

<Raw material proportions>

The proportions of the aldehyde compound to the hydroxynaphthalene-based compound supplied to the condensation reaction may need to be adjusted in accordance with factors such as the nature of the two compounds, the type of solvent and catalyst used, and the condensation reaction conditions, and definitive proportions can therefore not be given. However, it is preferable that the number of mols of aldehyde groups (-CHO) contained within the aldehyde compound is typically within a range from 0.1 to 10 mols, and particularly from 0.5 to 5 mols, per 1 mol of hydroxyl groups contained within the hydroxynaphthalene-based compound.

<Condensation reaction solvent>

The solvent used during the condensation reaction of the two reaction raw materials described above is water,

an organic solvent, or a mixed solvent thereof.
There are no particular restrictions on the organic solvent, provided it is capable of dissolving the two reaction raw materials to form a homogeneous solution, although a water-soluble organic solvent is preferred. Examples of such organic solvents include alcohols such as methanol, ethanol and propanol; ketones such as acetone and methyl ethyl ketone; esters such as methyl acetate and ethyl acetate; and compounds represented by a general formula (1) shown below.

[Chemical Formula 1]

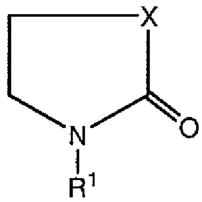

(1)

(wherein $R^1$ represents an alkyl group of 1 to 3 carbon atoms, and X represents a methylene group ($-CH_2-$) or a divalent group represented by a formula: $-NR^2-$ (wherein $R^2$ represents an alkyl group of 1 to 3 carbon atoms))
These may be used individually or as a mixed solvent of two or more thereof. Further, as mentioned above, mixed solvents of these organic solvents and water may also be used.

In the above general formula (1), $R^1$ is an alkyl group of 1 to 3 carbon atoms, and examples include a methyl group, ethyl group, propyl group or isopropyl group, and of these, a methyl group is preferred. In those cases where X is a group represented by the formula: $-NR^2-$, $R^2$ is the same type of alkyl group as that described for $R^1$, and is preferably a methyl group.
Examples of compounds represented by the above general formula (1) include N-methyl-2-pyrrolidone, N,N'-dimethyl-2-imidazolidone, N-ethyl-2-pyrrolidone, N,N'-diethyl-2-imidazolidone, N-propyl-2-pyrrolidone and N,N'-dipropyl-2-imidazolidone, and of these, N-methyl-2-pyrrolidone and N,N'-dimethyl-2-imidazolidone are preferred. As described above, these compounds may be used individually or in combinations of two or more.

Of the solvents described above, compounds represented by the above general formula (1), and particularly N-methyl-2-pyrrolidone, N,N'-dimethyl-2-imidazolidone, or mixtures thereof, or alternatively mixed solvents comprising a compound represented by the general formula (1) and water, are preferred. The reason for this preference is that such solvents offer good solubility of the hydroxynaphthalene-based compound that acts as a reaction raw material, and also enable a homogeneous solution of the condensation reaction product to be obtained following completion of the condensation reaction, with no precipitates being generated during the condensation reaction, meaning that contamination of the polymer product with precipitates derived from the condensation reaction can be effectively avoided.

In those cases where a mixed solvent of a compound represented by the general formula (1) and water is used, there are no particular restrictions on the proportion of the compound, although typically, the amount of the compound is within a range from 2 to 500 parts by mass, and preferably from 5 to 200 parts by mass, per 100 parts by mass of water. Furthermore, there are no particular restrictions on the amount of solvent used, provided the solvent is capable of dissolving the two reaction raw materials to form a homogeneous solution, and is also capable of producing a homogeneous solution of the condensation reaction product following completion of the condensation reaction, although typically, the amount of the solvent is within a range from 2 to 500 parts by mass, and preferably from 5 to 200 parts by mass, per 100 parts by mass of the combination of the two reaction raw materials.

<Condensation reaction>

The condensation reaction is conducted under temperature conditions that are typically within a range from room temperature to 200°C, and preferably from 30 to 150°C after the two reaction raw materials described above are uniformly dissolved in the aforementioned solvent. The time required for the condensation reaction may require adjusting depending on the combined amount of the two reaction raw materials, but is typically within a range from 2 to 100 hours, and preferably from 3 to 30 hours.

A catalyst is preferably used in the condensation reaction described above. This catalyst can use an acidic

catalyst such as sulfuric acid, hydrochloric acid, perchloric acid, p-toluenesulfonic acid, methanesulfonic acid or trifluoromethanesulfonic acid; or a basic catalyst such as sodium hydroxide, potassium hydroxide or ammonium hydroxide. There are no particular restrictions on the amount used of this catalyst, which may be any catalytically effective amount, although a typical amount is within a range from 1 to 20 parts by mass, and preferably from 2 to 15 parts by mass, per 100 parts by mass of the combination of the two reaction raw materials. An amount within the above range is advantageous economically, and yet is still capable of satisfactorily accelerating the condensation reaction.

Furthermore, although there are no particular restrictions on the pH conditions within the reaction system for the above condensation reaction, typically, the pH is within a range from 1 to 13, and is preferably from 7 to 13. If required, a pH regulator may also be added to the reaction system, and there are no particular restrictions on the nature of the pH regulator used, nor on the amount added.

The above condensation reaction enables the condensation reaction product of the aldehyde compound and the hydroxynaphthalene-based compound to be obtained in the form of a homogeneous solution. Subsequently, the solvent and the like are removed from the solution, yielding the condensation reaction product that represents the component (A) of the present invention. The above solution may also be supplied, as is, to the preparation of the scale preventive agent of the present invention, provided the solution does not impair the preparation of the scale preventive agent in any way. This offers the advantage of a simplified production process.

<Reducing agent>

In the above condensation reaction, a reducing agent is preferably added to the reaction system or the solution of the condensation reaction product during at least one stage amongst prior to commencement of the condensation reaction, during the condensation reaction, and following completion of the condensation reaction. Adding the reducing agent to the reaction system during at least one stage amongst prior to commencement of the condensation reaction and during the condensation reaction is particularly desirable. Adding the reducing agent improves the stability of the homogeneity of the condensation reaction product solution obtained from the condensation reaction, and also offers the advantage that gels are not generated even on long-term storage of the product solution, thereby effectively preventing the incorporation of such gels in the polymer product, and removing the resulting effects on the product quality. Moreover, adding the reducing agent offers an additional advantage in that it improves the scale adhesion prevention effect of the scale preventive coating generated from the scale preventive agent of the present invention.

The above expression "prior to commencement of the condensation reaction" means following the preparation of a solution containing the two reaction raw materials and the like, but prior to the completion of the process of raising the temperature of the reaction system from room temperature to a predetermined reaction temperature. Furthermore, the expression "during the condensation reaction" describes the stage after the temperature of the reaction system has reached the predetermined reaction temperature, but prior to completion of the condensation reaction, while the reaction system still contains unreacted raw materials. Moreover, the expression "following completion of the condensation reaction" describes the stage following completion of the condensation reaction, when the condensation reaction product exists in solution form.

Examples of the reducing agent include sulfites, phosphites, nitrites, reducing sugars, and thiourea dioxide.

Specific examples of the sulfites include ammonium sulfite, potassium sulfite, sodium sulfite, ammonium hydrogen sulfite, sodium hydrogen sulfite, sodium dithionite ($Na_2S_2O_4$), and rongalite.

Specific examples of the phosphites include ammonium phosphite, sodium phosphite, potassium phosphite, calcium phosphite, uranyl phosphite, cobalt phosphite, ferrous phosphite, ferric phosphite, copper phosphite, barium phosphite, hydrazinium phosphite, ammonium hydrogen phosphite, sodium hydrogen phosphite, potassium hydrogen phosphite, potassium hydrogen phosphite, calcium hydrogen phosphite, cobalt hydrogen phosphite, cuprous hydrogen phosphite, cupric hydrogen phosphite, ferrous hydrogen phosphite, ferric hydrogen phosphite, lead hydrogen phosphite, barium hydrogen phosphite, magnesium hydrogen phosphite, manganese hydrogen phosphite, and hydrazinium hydrogen phosphite.

Specific examples of the nitrites include ammonium nitrite, sodium nitrite, potassium nitrite, calcium nitrite, zinc nitrite, silver nitrite, cobalt potassium nitrite, cobalt sodium nitrite, strontium nitrite, cesium nitrite, cerium nitrite, cupric nitrite, nickel nitrite, barium nitrite, magnesium nitrite, lithium nitrite, and rubidium nitrite.

The reducing sugars are sugars that have a free aldehyde group or carbonyl group and exhibit reducing properties. Specific examples include maltose, lactose, and grape sugar (glucose).

The sulfites, phosphites, nitrites, reducing sugars, and thiourea dioxide listed above may each be used individually or in combinations of two or more, and furthermore, combinations of two or more different types of reducing agent, such as a combination of a sulfite and a phosphite, may also be used.

Furthermore, of the reducing agents listed above, sulfites and thiourea dioxide are preferred.

In those cases where this reducing agent is used, the amount used is typically within a range from 0.01 to 10 parts by mass, and preferably from 0.1 to 3 parts by mass, per 100 parts by mass of the combination of the two reaction

raw materials described above.

<Molecular weight of the condensation reaction product>

The molecular weight of the condensation product of the component (A), reported as a weight average molecular weight measured by permeation chromatography and referenced against polystyrene standards, is typically not more than 10,000, preferably not more than 5,000, particularly not more than 4,000, and still preferably within a range from 900 to 4,000. If this weight average molecular weight is too high, then when the number of polymerization batches exceeds approximately 900 batches, the thickness of the scale preventive coating reaches approximately 1.0 mm or more, increasing the likelihood of problems such as a deterioration in the heat removal capabilities of the polymerization vessel jacket, and the problem wherein detached portions of the scale preventive coating becoming incorporated within the polymer product, causing colored foreign matter. In contrast, if the weight average molecular weight is 4,000 or less, then these types of problems can be suppressed particularly effectively. However, in order to improve the scale prevention effect, the component (B) mentioned above is essential, and use of the component (C) is also preferred.
As described above, a reducing agent may be used during the synthesis process,
and in terms of suppressing the molecular weight of the condensation reaction product of the component (A) to not more than 4,000, the reducing agent is preferably added during at least one stage amongst prior to commencement of the condensation reaction and during the condensation reaction. If the reducing agent is added following completion of the condensation reaction, then the molecular weight of the condensation reaction product may not be 4,000 or less.

[(B) (B1) Organophosphoric acid compound, or (B2) inorganic phosphoric acid compound having 3 or more phosphorus atoms, or a combination thereof]
In the polymer scale adhesion preventive agent of the present invention, in addition to the condensation reaction product of the component (A) described above, (B1) an organophosphoric acid compound, or (B2) an inorganic phosphoric acid compound having 3 or more phosphorus atoms, or a combination thereof is also used as a component (B). The organophosphoric acid compound and the inorganic phosphoric acid compound having 3 or more phosphorus atoms may each use either individually or in combinations of two or more. By combining the component (A) and the component (B), a scale preventive coating having a markedly superior scale prevention effect can be formed solely via single-stage application, and a polymer product having absolutely no quality problems can be produced. Moreover, even if the number of polymerization batches exceeds 900 batches, the thickness of the scale preventive coating can be suppressed to not more than approximately 0.2 mm, and therefore the heat removal capabilities of the polymerization vessel jacket can be maintained, and any increase in colored foreign matter within the polymer product can be suppressed.

In this description, the term "organophosphoric acid compound" describes organophosphoric acids (organic substances having a group represented by a formula: - O-P(=O)(OH)-O-, a group represented by a formula: -O-P(=O)(OH)$_2$, or a combination thereof) and salts thereof, whereas the term "inorganic phosphoric acid compound" describes inorganic phosphoric acids (inorganic substances having a group represented by a formula: -O-P(=O)(OH)-O-, a group represented by a formula: -O-P(=O)(OH)$_2$, or a combination thereof) and salts thereof. Examples of the organophosphoric acid compound of the component (B1) include lecithin, phytic acid, nucleic acid, and salts thereof. Examples of the inorganic phosphoric acid compound having 3 or more phosphorus atoms of the component (B2) include tripolyphosphoric acid, polyphosphoric acids having 4 or more phosphorus atoms, and preferably 4 to 12 phosphorus atoms, and salts thereof. Examples of the salts include alkali metal salts such as sodium salts and potassium salts. Of these, organophosphoric acid compounds yield a further improvement in the scale prevention effect and are therefore preferred.

The amount used of this component (B) is preferably within a range from 0.1 to 100 parts by mass, and particularly preferably within a range from 1 to 50 parts by mass, per 100 parts by mass of the condensation reaction product of the component (A) described above. This range is preferred in terms of achieving a favorable coating of the scale preventive agent.

[(C) (C1) Blue water-soluble dye, or (C2) black water-soluble dye, or a combination thereof]
In addition to the components (A) and (B) described above, the scale preventive agent of the present invention may also include (C) (C1) a blue water-soluble dye, or (C2) a black water-soluble dye, or a combination thereof. Joint use of this component (C) strengthens the adsorption of the scale preventive coating to the inner wall surfaces of the polymerization vessel, and has the effect of improving the scale prevention effect, and is therefore preferred in some cases. However, the amount added of the component (C) is preferably adjusted within a range that enables the luminosity index (L value) of the obtained polymer product to be maintained at a high level. The blue water-soluble dyes and black water-soluble dyes may each be used individually or in combinations of two or more.

Examples of the blue water-soluble dye of the component (C1) include blue water-soluble azo dyes such as blue water-soluble monoazo and polyazo dyes, and blue water-soluble metal complex azo dyes; blue water-soluble anthraquinone dyes; blue water-soluble inigoid dyes; blue water-soluble triphenylmethane dyes; and blue water-soluble azine dyes. Examples of the black water-soluble dyes of the component (C2) include black water-soluble azo dyes such as black water-soluble monoazo and polyazo dyes, and black water-soluble metal complex azo dyes; black water-soluble

anthraquinone dyes; black water-soluble indigoid dyes; black water-soluble triphenylmethane dyes; and black water-soluble azine dyes.

Examples of the blue water-soluble monoazo and polyazo dyes include C.I. Acid Blue 29, 60, 92, 113, 117 and 120.

Examples of the blue water-soluble metal complex azo dyes include C.I. Acid Blue 151, 154, 158, 161, 166, 167, 170, 171, 175, 184, 192, 199, 229, 234 and 236.

Examples of the blue water-soluble anthraquinone dyes include C.I. Acid Blue 23, 25, 27, 40, 41, 43, 45, 54, 62, 72, 78, 80, 82, 112, 126, 127, 129, 130, 131, 138, 140, 142, 143, 182, 183, 203, 204 and 205.

An example of the blue water-soluble inigoid dyes is C.I. Food Blue 1.

Examples of the blue water-soluble triphenylmethane dyes include C.I. Acid Blue 1, 7, 9, 15, 22, 83, 90, 93, 100, 103 and 104; and C.I. Food Blue 2.

An example of the blue water-soluble azine dyes is C.I. Acid Blue 59.

Examples of the black water-soluble azo dyes include black water-soluble monoazo and polyazo dyes, and black water-soluble metal complex azo dyes.

Examples of the black water-soluble monoazo and polyazo dyes include C.I. Acid Black 1, 7, 24, 26, 29, 31, 44, 76, 94, 109 and 110.

Examples of the black water-soluble metal complex azo dyes include C.I. Acid Black 51, 52, 58, 62, 63, 64, 67, 72, 107, 108, 112, 115, 118, 119, 121, 122, 123 and 131.

An example of the black water-soluble anthraquinone dyes is C.I. Mordant Black 13.

An example of the black water-soluble indigoid dyes is C.I. Vat Black 1.

An example of the black water-soluble azine dyes is C.I. Acid Black 2.

In those cases where the component (C) is used, the amount used is preferably within a range from 0.001 to 10 parts by mass, and particularly preferably within a range from 0.01 to 2 parts by mass, per 100 parts by mass of the condensation reaction product of the component (A).

[Other components]

Other components besides the components described above may also be added to the scale preventive agent of the present invention according to need, provided the addition of these other components does not impair the objects or effects of the present invention. Examples of these other components include inorganic colloids, alkali metal silicates, and water-soluble polymers.

[Preparation of the scale preventive agent]

In preparing the scale preventive agent, the above component (A) may be mixed with a solution of the above component (B), for example. In addition, the solution of the condensation reaction product obtained in the condensation reaction for the component (A) may be used, as is, and simply mixed with a solution of the component (B). Furthermore, where necessary, either one or both of the above component (C) and other optional components may also be mixed therewith together during this mixing process.

In order to prepare the solution of the above component (B), either water, or a mixed solvent of water and a hydrophilic organic solvent that is miscible with water, is used as the solvent. Examples of the hydrophilic organic solvent include alcohol-based solvents such as methanol, ethanol and propanol; ketone-based solvents such as acetone and methyl ethyl ketone; ester-based solvents such as methyl acetate and ethyl acetate; and compounds represented by the general formula (1) shown above such as N-methyl-2-pyrrolidone and N,N'-dimethyl-2-imidazolidone. These can be used individually or as mixed solvents comprising two or more thereof.

Of the above solvents, the use of water, a mixed solvent containing water and an aforementioned alcohol-based solvent, or a mixed solvent containing water and a compound represented by the above general formula (1) is preferred in terms of achieving favorable solubility of the component (B) and a comparatively low odor level.

In those cases where a mixed solvent of water and a hydrophilic organic solvent is used, the amount of the hydrophilic organic solvent is preferably restricted to an amount that reduces the possibility of precipitation of the dissolved components as a result of variation in the concentration caused by volatilization of the hydrophilic organic solvent, reduces the danger levels in terms of flammability and toxicity, and ensures safe handling of the solvent. Specifically, in a mixed solvent with water, the amount of the hydrophilic organic solvent is preferably not more than 50% by mass, and is more preferably 30% by mass or lower.

Furthermore, during preparation of the solution of the component (B), the pH of the solution must normally be 7.5 or higher, and preferably within a range from 8.0 to 13.0, in order to ensure complete dissolution of the component (B). In order to achieve such a pH value, a pH regulator such as sodium hydroxide, potassium hydroxide or ethylenediamine may also be added as required.

The concentration of the component (B) within the above solution of the component (B) must be adjusted in accordance with the nature of the component (B) used, but is preferably within a range from 1.0 to 15% by mass, and is more preferably from 2.0 to 10% by mass.

Using the method outlined above, a scale preventive agent comprising each of the above components can be obtained as a homogeneous liquid, and there are no particular restrictions on the actual mixing operation. The mixing apparatus may by a typically employed apparatus, and for example, an apparatus comprising a reaction vessel or the like having a stirrer and fitted with a heating jacket may be used.

The homogeneous liquid of the scale preventive agent of the present invention obtained in this manner is used as a coating liquid for application to the inner wall surfaces and the like of the polymerization vessel.

The solid fraction (which describes the non-volatile components, and includes the component (A) and the component (B), or the components (A) to (C) in those cases where the component (C) exists, and may also include a portion of any other components in those cases where such other components exist) contained within the above coating liquid is preferably set within a range that ensures no precipitation of the condensation product, and it is therefore desirable that the solid fraction is typically within a range from 2 to 25% by mass, and preferably within a range from 3 to 15% by mass, in total.

Furthermore, because the coating liquid must be sufficiently alkaline to prevent precipitation of the condensation product, the pH of the coating liquid must normally be 7.5 or higher, and is preferably within a range from 8.0 to 13.0. If necessary, this pH value can be set by adjusting the amount of a pH regulator such as sodium hydroxide, potassium hydroxide or ethylenediamine. If this pH value is less than 7.5, then the obtained scale preventive agent tends to be prone to a deterioration in storage stability, a precipitate may develop, the coating operation tends to become more difficult, and the scale adhesion prevention effect is prone to deterioration. As a result of these problems developing, the targeted scale adhesion prevention effect may be unobtainable.

[Formation of scale preventive coating]

FIG. 1 is a schematic illustration of an apparatus used in forming a scale preventive coating. The process for forming a scale preventive coating using the scale preventive agent of the present invention is described with reference to FIG. 1. There are no particular restrictions on the method used for applying the scale preventive agent of the present invention, although the scale preventive agent is preferably applied to the inner wall surfaces and the like of the polymerization vessel, for example, using steam as a carrier.

<Steam carrier>

The steam used as the carrier for the coating liquid may be either normal saturated steam or superheated steam, and it is preferable that the steam has a pressure that is typically within a range from 0.196 to 3.43 MPa·G (2 to 35 $kgf/cm^2$·G), and particularly from 0.196 to 1.96 MPa·G (2 to 20 $kgf/cm^2$·G). It is preferable that the steam temperature is typically within a range from 120 to 260°C, and particularly from 130 to 200°C.

The above pressure and temperature values for the steam refer to values measured prior to mixing of the steam with the coating liquid, such as within a steam supply line 6 illustrated in FIG. 1, as stated below.

<Application process>

Step 1. (Preheating of the inner wall surfaces and the like of the polymerization vessel with steam)

Hot water or the like is passed through a jacket 2 fitted to a polymerization vessel 1 to preheat the inner wall surfaces of the polymerization vessel to a temperature of at least 50°C, and preferably a temperature from 50 to 95°C. A coating ring 4 formed from a ring-shaped pipe and having downward directed nozzles 3a and upward directed nozzles 3b is provided in the upper section of the polymerization vessel. A line 5 through which a combination of the steam and the coating liquid can be supplied from a position outside the polymerization vessel 1 is connected to the coating ring 4.

A steam supply line 6 and a coating liquid supply line 7 are connected to the line 5 via respective valves. If necessary, only steam supplied from the steam supply line 6 and the line 5 can be blown into the polymerization vessel from the coating nozzles 3a and 3b of the coating ring 4, thereby preheating the baffle (not shown in the figure) and stirring blades (not shown in the figure) and the like housed inside the polymerization vessel. In this apparatus, the steam is supplied to the coating ring 4 from a steam feeder 8, through a flow meter 9, and then through the line 6 and the line 5.

Step 2. (Application of scale preventive agent)

Steam is supplied to the coating ring 4, and a coating liquid 11 housed in a coating liquid tank 10 is also supplied

to the coating ring 4 through the line 7 and the line 5, using a pump 12 or an aspirator valve (not shown in the figure). In the figure, "P" represents a pressure gauge. The coating liquid forms a combined mist with the steam, and is applied in this form to the surfaces that the monomer contacts during the polymerization reaction, such as the inner wall surfaces of the polymerization vessel, the baffle surfaces, and the surfaces of the stirring blades. The coating liquid applied to these surfaces undergoes drying at the same time as the application, thus forming a scale preventive coating. Accordingly, a special drying operation is unnecessary.

It is preferable that the mixing ratio (L/G) between the coating liquid (L) and the steam (G) in the line 5, reported as a (mass referenced) flow rate ratio per unit of time, is typically controlled to a ratio within a range from 0.005 to 0.8, and particularly from 0.01 to 0.2. By ensuring that the mixing ratio falls within the above range, the aforementioned mist can be formed in a state that is ideal for forming the scale preventive coating on the inner wall surfaces and the like of the polymerization vessel.

Step 3. (Water washing)

After halting the supply of steam and the coating liquid, the inside of the polymerization vessel 1 is washed with cleaning water 14 that is housed in a water tank 13. The cleaning water is fed through a line 16 using a pump 15, and is supplied to the polymerization vessel from a nozzle 17. In those cases where the state of the formed coating is favorable and the quality of the polymer product is unlikely to be affected even if the water washing step is omitted, the water washing can be omitted, meaning the process can be simplified and the productivity improved.

It is preferable that the coating amount (following drying) of the scale preventive agent formed by the above steps is typically within a range from 0.0005 to 3 $g/m^2$, and is particularly from 0.0005 to 1 $g/m^2$. By ensuring the coating amount is within this range, a coating with a necessary and sufficient thickness is formed on the inner wall surfaces and the like of the polymerization vessel, and a favorable scale prevention effect can be achieved. In addition, the problems that accompany detachment of the coating from the polymerization vessel inner wall surfaces and the like can be suppressed.

[Polymerization]

The scale preventive agent of the present invention is applied for the polymerization of a monomer having an ethylenic unsaturated double bond. Examples of this monomer include vinyl halides such as vinyl chloride; vinylidene halides such as vinylidene chloride; vinyl esters such as vinyl acetate and vinyl propionate; acrylic acid, methacrylic acid and esters or salts thereof; maleic acid, fumaric acid and esters or acid anhydrides thereof; conjugated diene-based monomers such as butadiene, chloroprene, and isoprene; styrene; acrylonitrile; and vinyl ether.

Examples of processes to which the scale preventive agent of the present invention can be applied particularly favorably include processes in which a vinyl halide such as vinyl chloride, a vinylidene halide such as vinylidene chloride, or a monomer mixture containing one of these monomers as the major component and also containing another monomer, is subjected to suspension polymerization or emulsion polymerization in an aqueous medium, thereby producing a polymer or copolymer of the monomer(s), or a copolymer of the monomer mixture.

A scale preventive coating formed from the scale preventive agent of the present invention exhibits a high level of durability even when applied to the polymerization of monomers such as $\alpha$-methylstyrene, acrylate esters, methacrylate esters, acrylonitrile and vinyl acetate that exhibit powerful dissolution of conventional scale preventive coatings, and can therefore be applied favorably even to the production of polymer beads or latex formed from polystyrene, polymethyl methacrylate or polyacrylonitrile or the like, the production of synthetic rubbers such as styrene butadiene rubber (SBR), acrylonitrile butadiene rubber (NBR), chloroprene rubber (CR), isoprene rubber (IR) and butyl rubber (IIR) (wherein these synthetic rubbers are typically produced by emulsion polymerization), and the production of ABS resins.

During the polymerization of one, or two or more, of these monomers, the objective of preventing scale can be achieved with good effectiveness regardless of whether the polymerization method employs suspension polymerization, emulsion polymerization, bulk polymerization or solution polymerization, and even if the polymerization is performed in the presence of any additives such as emulsifiers, stabilizers, lubricants, plasticizers, pH regulators and chain transfer agents. For example, in the case of the suspension polymerization or emulsion polymerization of a vinyl-based monomer, various additives may be added to the polymerization system as required. Examples of these additives include suspension stabilizers such as partially saponified polyvinyl alcohol and methyl cellulose; anionic emulsifiers such as sodium lauryl sulfate; nonionic emulsifiers such as sorbitan monolaurate and polyoxyethylene alkyl ethers; stabilizers such as tribasic lead sulfate, calcium stearate, dibutyltin dilaurate and dioctyltin mercaptide; chain transfer agents such as trichloroethylene and mercaptans; and any of the various pH regulators. By employing the scale preventive agent of the present invention, scale adhesion can be effectively prevented even when the above types of additives exist in the polymerization system.

The dramatic polymer scale prevention effect of the scale preventive agent of the present invention is not

affected by the type of polymerization initiator used, and manifests regardless of the type of polymerization initiator used. Specific examples of the polymerization initiator include t-butyl peroxyneodecanoate, bis(2-ethylhexyl) peroxydicarbonate, 3,5,5-trimethylhexanoyl peroxide, α-cumyl peroxyneodecanoate, cumene hydroperoxide, cyclohexanone peroxide, t-butyl peroxypivalate, bis(2-ethoxyethyl) peroxydicarbonate, dibenzoyl peroxide, diisopropylbenzene hydroperoxide, lauroyl peroxide, 2,4-dichlorobenzoyl peroxide, diisopropyl peroxydicarbonate, α,α'-azobisisobutyronitrile, α,α'-azobis-2,4-dimethylvaleronitrile, di-2-ethylhexyl diperoxyisophthalate, potassium persulfate, and ammonium persulfate.

Other conditions for the polymerization may be the same as conventionally used conditions, and there are no particular restrictions, provided the effects of the present invention are not impaired. Specifics of typical polymerization conditions are described below for the examples of suspension polymerization, solution polymerization and bulk polymerization, although the conditions are not necessarily restricted to the values listed below.

In the case of a suspension polymerization, water and a dispersant are first placed in the polymerization vessel, and a polymerization initiator is then added. Subsequently, the inside of the polymerization vessel is either evacuated to reduce the pressure to a value within a range from approximately 0.001 to 101 kPa·G (approximately 0.01 to 760 mmHg), or set at atmospheric pressure, a sufficient amount of the monomer is then added to raise the internal pressure within the polymerization vessel to a value that is typically within a range from 49 to 2,940 kPa·G (0.5 to 30 kgf/$cm^2$·G), and the polymerization is then conducted at a reaction temperature of 30 to 150°C. During the polymerization, any one, or two or more of water, a dispersant, and a polymerization initiator may be added if required. The reaction temperature during polymerization varies depending on the monomer undergoing polymerization, and, for example, in the case of a vinyl chloride polymerization, the polymerization is conducted at 30 to 80°C, whereas in the case of a styrene polymerization, the polymerization is conducted at 50 to 150°C. The polymerization is deemed to have finished either when the internal pressure of the polymerization vessel has dropped to a value within a range from 0 to 686 kPa·G (0 to 7 kgf/$cm^2$·G), or when the difference between the inlet temperature and the outlet temperature of the cooling water flowing in and out of the cooling jacket fitted around the exterior of the polymerization vessel has substantially disappeared (that is, when heat generation from the polymerization reaction has subsided). The amounts of water, the dispersant and the polymerization initiator added during the polymerization are typically within ranges from 20 to 500 parts by mass for water, from 0.01 to 30 parts by mass for the dispersant, and from 0.01 to 5 parts by mass for the polymerization initiator, relative to 100 parts by mass of the monomer.

In the case of a solution polymerization, an organic solvent such as toluene, xylene or pyridine is used instead of water as the polymerization medium. A dispersant may be used if required. The other polymerization conditions are generally the same as those described above for suspension polymerization.

In the case of a bulk polymerization, the inside of the polymerization vessel is either evacuated to reduce the pressure to a value within a range from approximately 0.001 to 101 kPa·G (approximately 0.01 to 760 mmHg), or set at atmospheric pressure, the monomer and a polymerization initiator are then added to the polymerization vessel, and the polymerization is conducted at a reaction temperature of -10 to 250°C. For example, in the case of a vinyl chloride polymerization, the polymerization is conducted at 30 to 80°C, whereas in the case of a styrene polymerization, the polymerization is conducted at 50 to 150°C.

## Examples

The present invention is described in detail below based on examples and comparative examples.
Those entries in the tables that are denoted with an *, for example under "Coating liquid No.", refer to a comparative example that does not satisfy the conditions of the present invention, whereas the other entries represent examples of the present invention.

In the following description, "parts" refers to "parts by mass". Furthermore, the "Condensation product (A)" in Table 1 refers to the condensation reaction product of an aldehyde compound and a hydroxynaphthalene-based compound that represents the component (A). The "Auxiliary agent (B)" represents the organophosphoric acid compound, the inorganic phosphoric acid compound having 3 or more phosphorus atoms, or the combination thereof. The "Auxiliary agent (C)" refers to the blue water-soluble dye, the black water-soluble dye, or the combination thereof that represents the component (C). The terms (A), (B) and (C) within Table 1 and Table 2 refer to each of the components in accordance with the previous description. This also applies in Tables 3 to 6.

### [Preparation of condensation reaction products]

In the following preparation examples for the condensation reaction product of the component (A), the weight average molecular weight of the obtained condensation product was measured in the manner described below.

- Measurement of weight average molecular weight

Gel permeation chromatography (GPC) was used to measure the polystyrene-referenced weight average molecular weight, under the measurement conditions described below.

Columns: guard column

product name: shim-pack GPC-800DP (manufactured by Shimadzu Corporation)
analysis columns
brand name: shim-pack GPC-803D, 802D (manufactured by Shimadzu Corporation)
Carrier: LiBr/DMF = 10 mmol/L
Flow rate: 1.0 mL/min
Detector: ultraviolet absorption spectrum (wavelength = 290 nm)
Temperature: 60°C

<Preparation example 1> Preparation of condensation product No. 1 (water solvent type)

A pressure-resistant reaction vessel was charged with 36.0 kg (250 mols) of 1-naphthol and 180 L of a 1N aqueous solution of NaOH (NaOH content: 7.2 kg (180 mols)), and with the mixture undergoing stirring, the temperature was raised to 70°C. Subsequently, 19.75 kg of an aqueous solution in which formaldehyde was dissolved (containing 1.92% by mass of formaldehyde) was added dropwise to the reaction mixture at a constant rate over a period of 1.5 hours. During the period up until completion of this dropwise addition, the internal temperature of the reaction vessel was regulated so as not to exceed 80°C. Subsequently, stirring of the reaction mixture was continued for 3 hours, and during this period the temperature was lowered to 60°C. The temperature of the reaction mixture was then raised to 98°C, and reaction was conducted at 98°C for 1.5 hours. The reaction mixture was then cooled, yielding an alkaline solution of a condensation reaction product (condensation product No. 1).
After the solvent was then removed from the cooled reaction mixture, the residue was washed with pure water and then dried under reduced pressure at 50°C. Measurement of the weight average molecular weight of the condensation product No. 1 revealed a result of 2,400.

<Preparation example 2> Preparation of condensation product No. 2 (the molecular weight was lowered, and a reducing agent was used)

A condensation reaction product (condensation product No. 2, weight average molecular weight: 1,900) was obtained in the same manner as preparation example 1, with the exception of adding 43.53 kg of a 20% by mass aqueous solution of sodium dithionite (sodium dithionite content: 50 mols) in a dropwise manner and at a constant rate over a period of 0.1 hours, following the raising of the temperature of the reaction mixture to 70°C and prior to the commencement of the dropwise addition of the formaldehyde, in the preparation example 1.

<Preparation example 3> Preparation of condensation product No. 3 (the molecular weight was lowered, and a reducing agent was used)

A condensation reaction product (condensation product No. 3, weight average molecular weight: 1,400) was obtained in the same manner as preparation example 2, with the exception of adding 17.25 kg of a 20% by mass aqueous solution of sodium nitrite (sodium nitrite content: 50 mols) in a dropwise manner and at a constant rate over a period of 0.1 hours instead of the aqueous solution of sodium dithionite in the preparation example 2.

<Preparation Example 4> Preparation of condensation product No. 4 (organic solvent type)

A condensation reaction product (condensation product No. 4, weight average molecular weight 2,200) was obtained in the same manner as preparation example 1, with the exception of charging with 90 kg of N-methyl-2-pyrrolidone and 90 L of a 2N aqueous solution of NaOH (NaOH content: 7.2 kg (180 mols)) instead of the 180 L of a 1N aqueous solution of NaOH in the preparation example 1.

<Preparation Example 5> Preparation of condensation product No. 5 (organic solvent type, a reducing agent was used)

A condensation reaction product (condensation product No. 5, weight average molecular weight 1,500) was obtained in the same manner as preparation example 2, with the exception of charging with 90 kg of N-methyl-2-pyrrolidone and 90 L of a 2N aqueous solution of NaOH (NaOH content: 7.2 kg (180 mols)) instead of the 180 L of a 1N aqueous solution of NaOH in the preparation example 2.

<Preparation Example 6> Preparation of condensation product No. 6 (organic solvent type)

A condensation reaction product (condensation product No. 6, weight average molecular weight 4,700) was obtained in the same manner as preparation example 1, with the exception of charging with 90 kg of ethanol and 90 L of a 2N aqueous solution of NaOH (NaOH content: 7.2 kg (180 mols)) instead of the 180 L of a 1N aqueous solution of NaOH in the preparation example 1.

<Preparation Example 7> Preparation of condensation product No. 7 (organic solvent type, a reducing agent was used)

A condensation reaction product (condensation product No. 7, weight average molecular weight 2,500) was obtained in the same manner as preparation example 3, with the exceptions of charging with 90 kg of ethanol and 90 L of a 2N aqueous solution of NaOH (NaOH content: 7.2 kg (180 mols)) instead of the 180 L of a 1N aqueous solution of NaOH and using, instead of the aqueous solution of formaldehyde, 24.51 L of an aqueous solution containing 980 g of dissolved furfural per 1 L (furfural content: 250 mols), in the preparation example 3.

<Preparation Example 8> Preparation of condensation product No. 8 (organic solvent type)

A condensation reaction product (condensation product No. 8, weight average molecular weight 5,600) was obtained in the same manner as preparation example 1, with the exception of charging with 90 kg of N,N'-dimethyl-2-imidazolidone and 90 L of a 2N aqueous solution of NaOH (NaOH content: 7.2 kg (180 mols)) instead of the 180 L of a 1N aqueous solution of NaOH in the preparation example 1.

<Preparation Example 9> Preparation of condensation product No. 9 (organic solvent type, a reducing agent was used)

A condensation reaction product (condensation product No. 9, weight average molecular weight 3,100) was obtained in the same manner as preparation example 3, with the exceptions of charging with 90 kg of N,N'-dimethyl-2-imidazolidone and 90 L of a 2N aqueous solution of NaOH (NaOH content: 7.2 kg (180 mols)) instead of the 180 L of a 1N aqueous solution of NaOH and using, instead of the aqueous solution of sodium nitrite, 43.53 kg of a 20% by mass aqueous solution of sodium dithionite (sodium dithionite content: 50 mols), in the preparation example 3.

In Table 1 below, the condensation products No. 1 to No. 9 obtained in the above preparation examples 1 through 9 are labeled, in sequence, as CP1 to CP9.

[Preparation of coating liquids]

- Preparation of coating liquids Nos. 101 to 119 -

In the preparation of each of the coating liquids Nos. 101 to 119, the condensation product (A), the auxiliary agent (B) and the auxiliary agent (C) shown in Table 1 below were used in the mass ratio (A)/(B)/(C) shown in Table 1. The auxiliary agent (B) and the auxiliary agent (C) are as specified in Tables 3 and 4 below.

Moreover, using a solvent with the composition shown in Table 2, all of the above components were mixed together and dissolved. In this dissolution, the combined concentration of the component (A) through component (C), and the pH, were adjusted as shown in Table 2. The pH was adjusted using the pH regulator listed in Table 1. In this manner, coating liquids No. 101 to No. 119 were obtained, in which each component was dissolved homogenously.

Here, the coating liquid No. 102* is a comparative example using no auxiliary agent (B).

[Table 1]

| Coating liquid No. | Condensation product (A) | Auxiliary agent (B) | Auxiliary agent (C) | pH regulator | (A)/(B)/(C) (mass ratio) |
|---|---|---|---|---|---|
| 101 | CP1 | a | None | NaOH | 100/20/0 |
| 102* | CP1 | None | None | NaOH | 100/0/0 |
| 103 | CP1 | b | None | NaOH | 100/30/0 |

(continued)

| Coating liquid No. | Condensation product (A) | Auxiliary agent (B) | Auxiliary agent (C) | pH regulator | (A)/(B)/(C) (mass ratio) |
|---|---|---|---|---|---|
| 104 | CP1 | c | None | NaOH | 100/10/0 |
| 105 | CP2 | a | None | NaOH | 100/5/0 |
| 106 | CP3 | a | None | KOH | 100/20/0 |
| 107 | CP4 | b | None | ethylenediamine | 100/10/0 |
| 108 | CP5 | c | None | ethylenediamine | 100/10/0 |
| 109 | CP6 | d | None | KOH | 100/10/0 |
| 110 | CP7 | e | None | KOH | 100/10/0 |
| 111 | CP8 | a | None | NaOH | 100/10/0 |
| 112 | CP9 | b | None | NaOH | 100/20/0 |
| 113 | CP1 | a | I | NaOH | 100/10/1 |
| 114 | CP2 | b | II | NaOH | 100/10/0.02 |
| 115 | CP3 | c | III | NaOH | 100/10/0.01 |
| 116 | CP4 | d | IV | NaOH | 100/10/0.05 |
| 117 | CP5 | e | V | NaOH | 100/10/0.05 |
| 118 | CP6 | a | VI | NaOH | 100/10/0.02 |
| 119 | CP7 | b | VII | KOH | 100/20/0.10 |
| *: Comparative example | | | | | |

[Table 2]

| Coating liquid No. | Total concentration of (A)+(B)+(C) (% by mass) | Solvent (Composition and mass ratio) | pH of coating liquid |
|---|---|---|---|
| 101 | 10 | water | 12.3 |
| 102* | 10 | water | 12.3 |
| 103 | 10 | water | 12.3 |
| 104 | 10 | water | 12.3 |
| 105 | 10 | water | 12.3 |
| 106 | 5 | water | 10.0 |
| 107 | 10 | water / N-methyl-2-pyrrolidone 70/30 | 10.0 |
| 108 | 8 | water / N-methyl-2-pyrrolidone 50/50 | 9.0 |
| 109 | 15 | water / ethanol 80/20 | 11.0 |
| 110 | 15 | water / ethanol 80/20 | 12.5 |
| 111 | 15 | water / N,N'-dimethyl-2-imidazolidone 70/30 | 12.5 |
| 112 | 15 | water / N,N'-dimethyl-2-imidazolidone 70/30 | 12.5 |
| 113 | 10 | water | 12.5 |

(continued)

| Coating liquid No. | Total concentration of (A)+(B)+(C) (% by mass) | Solvent (Composition and mass ratio) | pH of coating liquid |
|---|---|---|---|
| 114 | 10 | water | 12.5 |
| 115 | 10 | water | 12.5 |
| 116 | 5 | water / N-methyl-2-pyrrolidone 80/20 | 12.5 |
| 117 | 10 | water / N-methyl-2-pyrrolidone 80/20 | 12.5 |
| 118 | 10 | water / ethanol 80/20 | 12.5 |
| 119 | 10 | water / ethanol 80/20 | 12.5 |
| *: Comparative example | | | |

<Auxiliary agent (B)>

The auxiliary agents (B) abbreviated as a through e in Table 1 above are listed below in Table 3.

[Table 3]

| Auxiliary agent (B) Phosphoric acid compound | | Manufacturer (Importer) | Product name |
|---|---|---|---|
| a | Phytic acid | Mitsui Fine Chemicals, Inc. | Phytic acid |
| b | Lecithin | Tokyo Chemical Industry Co., Ltd. | Lecithin |
| c | Nucleic acid | Tokyo Chemical Industry Co., Ltd. | Nucleic acid |
| d | Tripolyphosphoric acid | Wako Pure Chemical Industries, Ltd. | Tripolyphosphoric acid |
| e | Polyphosphoric acid (note) | Wako Pure Chemical Industries, Ltd. | Polyphosphoric acid |
| (Note): number of phosphorus atoms = 6 | | | |

<Auxiliary agent (C)>

The auxiliary agents (C) abbreviated as I through VII in Table 1 above are listed below in Table 4.

[Table 4]

| Auxiliary agent (C) Water-soluble dye | | Manufacturer (Importer) | Product name |
|---|---|---|---|
| I | C.I. Acid Black 2 | Orient Chemical Industries Co., Ltd. | |
| II | C.I. Food Blue 2 | Daiwa Kasei Co., Ltd. | Blue No. 2 |
| III | C.I. Acid Black 1 | Tokyo Chemical Industry Co., Ltd. | Acid Black 1 |
| IV | C.I. Food Blue 1 | Tokyo Chemical Industry Co., Ltd. | Food Blue 1 |
| V | C.I. Acid Blue 9 | Tokyo Chemical Industry Co., Ltd. | Acid Blue 9 |
| VI | C.I. Acid Blue 83 | Tokyo Chemical Industry Co., Ltd. | Acid Blue 83 |
| VII | C.I. Acid Blue 92 | Tokyo Chemical Industry Co., Ltd. | Acid Blue 92 |

Examples, Comparative examples

Using the polymerization apparatus illustrated in FIG. 2, the tests described below were conducted. Those elements in FIG. 2 that correspond with an equivalent element in FIG. 1 are labeled with the same number.

In FIG. 2, a SUS 316 L stainless steel polymerization vessel 1 with an internal capacity of 2 $m^3$ is fitted with a stirring device 19 having stirring blades 18 (the stirring motor is not shown in the figure), a heating and cooling jacket 2, a manhole 20, a baffle 21, and other fittings (not shown in the figure) typically provided within a polymerization vessel used for the polymerization of vinyl chloride. A line 22 connected to the upper section of the polymerization vessel 1 is a raw material supply line, and as shown in the figure, branch lines such as a vinyl chloride monomer (hereafter abbreviated as "VCM") supply line 22a, a catalyst solution supply line 22b, a suspension agent solution supply line 22c, and a pure water supply line 22d are connected to this line 22. Valves V1, V2, V3, V4 and V5 are provided within the supply line 22 and the lines 22a through 22d in the positions shown in the figure.
Furthermore, a line 23 connected to the upper section of the polymerization vessel 1 is provided for evacuating the inside of the polymerization vessel 1 and recovering VCM, and is connected to a gas holder 25 via a line 24 that branches from the line 23. A VCM recovery line 26 leads out of the gas holder 25, and another line 27 that leads out of the gas holder 25 is connected to the line 23 and is used in the pressure equalization operation described below. Valves V6, V7, V8, V9, V10, V11, V12 and V13 are provided within these lines 23, 24, 26 and 27 in the positions shown in the figure. The line 24 branches into a line 24a provided with a vacuum pump 28 that is used for evacuating the polymerization vessel 1 and recovering VCM and the like, and a line 24b provided with no such pump, and these branch lines then rejoin to form a single line which is connected to the gas holder 25.
Furthermore, a cleaning water supply line 16 for washing the inside of the polymerization vessel with water is connected to the upper section of the polymerization vessel 1. The line 16 is provided with a valve 14 in the position shown in the figure, and a nozzle 17 is provided at the tip of the line that leads into the polymerization vessel 1. In addition, a steam and coating liquid supply line 5 is connected to the upper section of the polymerization vessel 1, and a coating liquid supply line 7 is connected to this line 5 via a valve V17, as shown in the figure. Moreover, a steam supply line 6 is connected to the line 5 via a valve 18. A coating ring 4 fitted with coating nozzles 3a and 3b is provided at the tip of the line 5 located inside the polymerization vessel. Valves V15 and V16 are provided within these lines at the positions shown in the figure. The valve 18 is provided in the steam supply line 6 in the position shown in the figure. A line 29 is connected to the bottom of the polymerization vessel 1, and this line branches into a line 29a, which guides the polymer slurry into a slurry tank via a filter 30, and a line 29b, through which coating liquid and cleaning water and the like are discharged into a waste water tank. Valves V 19, V20 and V21 are provided within these lines 29, 29a and 29b respectively, in the positions shown in the figure.
In the test No. 101 through test No. 119, a vinyl chloride polymerization was conducted repeatedly in the manner described below, using the aforementioned coating liquid No. 101 through coating liquid No. 119 respectively. Although the coating liquid does need to be dried following application, a special drying operation is normally not required in the method employed here, and in the examples of the present invention, no drying operation (process) was performed.

(1) Pretreatment of the inside of the polymerization vessel

A scale preventive coating was formed on the inner walls and the like of the polymerization apparatus illustrated in FIG. 2 using the method outlined below. At this initial stage, all of the valves are closed.
In this pretreatment process, application of the coating liquid is conducted without passing hot water through the jacket 2 to preheat the inner wall surfaces of the polymerization vessel 1. This enables the process to be simplified.
The valves V18, V21, V19, V15 and V16 are opened, and steam at 392 kPa·G (4 $kgf/cm^2 \cdot G$) (143°C) is blown into the polymerization vessel for one minute at a flow rate of 4 kg/minute, thereby preheating the inside of the polymerization vessel, and the valve V17 is then opened and a coating liquid containing the scale preventive agent is supplied via the line 7 for one minute at a flow rate of 0.2 kg/minute. This enables the coating liquid to combine with the steam inside the line 5. The steam is used as a carrier, assisting the application of the scale adhesion preventive agent onto the polymerization vessel inner wall surfaces and the like, and simultaneously drying the coating liquid. At this point, the mixing ratio (L/G) between the coating liquid (L) and the steam (G), reported as a (mass referenced) flow rate ratio, is 0.05. Subsequently, the valves V18, V21, V19, V15, V16 and V17 are closed.
The valves V14, V19, V21, V6, V7 and V10 are opened, the inside of the polymerization vessel is washed with water for one minute, and the water after washing is discharged into the waste water tank. The valves V14, V19 and V21 are then closed.

(2) Charging

The valves V1, V2 and V3 are opened, and 200 parts of pure water, 0.020 parts of a partially saponified polyvinyl alcohol, and 0.026 parts of 2-hydroxypropyl methylcellulose (product name: metholose, manufactured by Shin-Etsu Chemical Co., Ltd., degree of methoxyl group substitution: 1.9, degree of 2-hydroxypropoxyl group substitution: 0.25) are introduced into the polymerization vessel 1. The valves V1, V2, V3, V6, V7 and V10 are then closed.
Next, the valves V1 and V5 are opened, 100 parts of VCM is introduced, and the valve V5 is closed. Subsequently,

with the introduced raw materials undergoing stirring, the valve V4 is opened, 0.03 parts of t-butyl peroxyneodecanoate is introduced, and the valves V1 and V4 are closed.

(3) Polymerization

With the introduced raw materials undergoing stirring, hot water is passed through the jacket 2 to raise the temperature, and once the internal temperature has reached 66°C, the supply of cooling water to the jacket 2 is commenced, and a polymerization is conducted with the internal temperature maintained at 66°C. The point where the pressure inside the polymerization vessel has fallen to 490 kPa·G (5 kgf/$cm^{2}$·G) is deemed to represent completion of the polymerization.

(4) Gas discharge

The valves V6, V8, V12 and V9 are opened, and unreacted VCM is discharged into the gas holder 25 until the internal pressure in the polymerization vessel falls to substantially atmospheric pressure (101 kPa·G). Subsequently, the valves V12, V8 and V9 are closed. The valves V11 and V10 are opened, the recovered VCM in the gas holder 25 is fed into a VCM recovery device through the line 26, and the valves V11 and V10 are then closed.

(5) Pressure equalization

The valves V7 and V10 are opened, and the internal pressure of the polymerization vessel 1 and the internal pressure of the gas holder 25 are equalized.

(6) Slurry extraction

The valves V 19 and V20 are opened, and the polymer slurry is extracted from inside the polymerization vessel into the slurry tank, passed through the filter 30. The filter 30 is a metal mesh filter of 5 to 7 mesh (pore size: approximately 3 to 4 mm). In those cases where the polymer slurry contains scale that has detached from the polymerization vessel inner wall surfaces or the like, the scale is trapped in the filter 30.
The polymer slurry extracted into the slurry tank (not shown in the figure) is subsequently dewatered and dried, yielding a vinyl chloride polymer product. Following extraction of the polymer slurry, the valve V20 is closed.

(7) First water washing of the polymerization vessel interior

The valve V21 is opened. Subsequently, the valve V14 is opened, and the inside of the polymerization vessel 1 is washed with water for 5 minutes, while the used cleaning water passes through the filter 30 and into the waste water tank. During this water washing of the inside of the polymerization vessel, hot water is passed through the jacket 2 to keep the temperature of the polymerization vessel wall surfaces at 70°C. During this water washing, if the used cleaning water contains scale that has detached from the polymerization vessel inner wall surfaces, and particularly from the regions in the vicinity of the gas-liquid interface, the stirring blades, or the top sections or supports of the baffle, this scale is trapped in the filter 30.
Subsequently, the valves V14, V19, V21, V6, V7 and V10 are closed.

(8) Steam application and simultaneous drying

The supply of hot water to the jacket 2 is halted. The valves V18, V21, V19, V15, V16 and V17 are opened, and steam at 392 kPa·G (4 kgf/$cm^{2}$·G) (143°C), and the coating liquid containing the scale preventive agent are supplied via the line 5 for one minute at flow rates of 240 kg/hour and 0.2 L/minute respectively, thus effecting steam application and simultaneous drying. Subsequently, the valves V18, V21, V19, V15, V16 and V 17 are closed.

(9) Second water washing of the polymerization vessel interior

The valves V14, V19 and V21 are opened, and the inside of the polymerization vessel 1 is washed with water for one minute, and the water after washing is discharged into the waste water tank. Subsequently, the valves V14, V19 and V21 are closed.
The operations from the charging step (2) through to the second water washing step (9) of the polymerization vessel interior represent one batch, and in each of the VCM polymerization tests, the above operations were repeated a sufficient number of times to reach the total number of batches listed in Table 5.

<Evaluation methods>

- Measurement of the amount of polymer scale adhesion

In each test, following completion of the final batch (for example, in the case where a total of 200 polymerization batches are conducted, after the 200th batch), the amount of polymer scale adhesion within the liquid phase section inside the polymerization vessel, and the amounts of polymer scale adhesion on the stirring blades, the baffle surfaces, and in the vicinity of the interface between the gas phase section and the liquid phase section were measured using the method described below.
The scale adhered to a square-shaped area of 10 cm × 10 cm of each of the above target surfaces was scraped off with a spatula as completely as could be confirmed with the naked eye, and was then weighed on a balance. The measured value was multiplied by 100 to determine the amount of scale adhesion (g) per 1 $m^2$. The results are shown in Table 5. For the condensation product (A) used in each of the tests, Table 5 also details whether the use of a product with a weight average molecular weight of 5,000 or less was present or absent, whether the addition of a reducing agent to the reaction system prior to synthesis was present or absent, whether the use of an organic solvent of the above general formula (1) as the solvent medium was present or absent, and whether the joint use of the auxiliary agent (C) was present or absent. ("O" represents the presence thereof, whereas no symbol represents the absence thereof.)

- Measurement of the amount of scale trapped by the filter

In each test, after the second water washing of the polymerization vessel interior within each of the above batches, but prior to the subsequent charging step, the scale that had detached from the polymerization vessel inner wall surfaces and the like and become trapped on the filter 30 was isolated and recovered, and following drying, the mass (g) of the scale was measured. For each test, the total mass (g) of scale collected over the total number of batches listed in Table 5 is detailed in Table 5.

- Measurement of the thickness of the residual scale preventive coating

In each test, following completion of the final batch, the residual scale preventive coating adhered to a square-shaped area of 10 cm × 10 cm on the inner wall surface that would have been beneath the gas-liquid interface within the straight-walled section of the polymerization vessel during the polymerization was scraped off with a spatula as completely as could be confirmed with the naked eye, and was then weighed on a balance. The thickness (mm) was calculated by dividing the measured mass (g) by 10. For example, if the amount of scale preventive coating was measured as 1 g, then the thickness of the residual scale preventive coating is calculated to be 0.1 mm. The specific gravity of the scale preventive coating is approximately 1, and in this calculation, the specific gravity of the scale preventive coating was deemed to be 1. Furthermore, in those cases where scale had adhered to the inner wall surface, the scale was scraped off with a spatula as completely as could be confirmed with the naked eye before the scale preventive coating was measured.

- Measurement of fish eyes

In each test, the (number of) fish eyes when the polymer obtained following completion of the final batch was molded into a sheet was measured using the method described below. The results are shown in Table 6.
100 parts of the polymer, 50 parts of dioctyl phthalate, 1 part of dibutyltin dilaurate, 1 part of cetyl alcohol, 0.25 parts of titanium oxide and 0.05 parts of carbon black were kneaded at 150°C for 7 minutes using 6-inch rollers, and the mixture was then molded into a sheet of thickness 0.2 mm. The number of fish eyes per 100 $cm^2$ of the thus obtained sheet was determined using a light transmission method.

- Measurement of luminosity index (L value)

In order to evaluate the anti-initial discoloration property when the polymer was molded into a sheet, the luminosity index (L value) was measured using the method described below. The results are shown in Table 6.
A mixture comprising 100 parts of the obtained polymer, 1 part of a dibutyltin laurate-based stabilizer (product name: TS-101, manufactured by Akishima Chemical Co., Ltd.), 0.5 parts of a cadmium organic complex-based stabilizer (product name: C-100J, manufactured by Katsuta Kako Co., Ltd.), and 50 parts of dioctyl phthalate as a plasticizer was kneaded at 150°C for 5 minutes using a twin roll mill, and was then molded into a sheet of thickness 0.8 mm. The thus obtained sheet was cut to dimensions of 4 cm × 4 cm, and the cut sheet was placed in a molding frame with dimensions of 4 cm × 4 cm × 1.5 cm, subsequently preheated at a temperature of 160°C for 5 minutes, and then press-molded for 5 minutes

under a pressure of 2.84 to 3.04 MPa (29 to 31 kgf/$cm^2$), thus preparing a measurement specimen. The luminosity index L of this specimen was determined in the manner described below.

First, the stimulus value Y of an XYZ color system was determined by a stimulus value direct-reading method, conducted in accordance with the prescription of JIS Z 8722 using the standard light C and a photoelectric colorimeter (product name: Z-1001 DP, a color difference meter, manufactured by Nippon Denshoku Industries Co., Ltd.). The condition d defined in section 4.3.1 of JIS Z 8722 was employed as the geometric condition of illumination and light reception.

Subsequently, the L value was calculated by entering the determined stimulus value Y in the Hunter's color difference equation defined in JIS Z 8730 (1980):

$$L = 10Y^{1/2}.$$

The results are shown in Table 6. Larger values of L indicate a higher level of whiteness, namely, a more favorable anti-initial discoloration property.

- Measurement of colored particles

A mixture comprising 100 parts of the polymer obtained following the completion of the final batch of each test, 2 parts of a stabilizer TVS N-2000E (a product name, manufactured by Nitto Kasei Co., Ltd.), and 20 parts of dioctyl phthalate as a plasticizer was kneaded thoroughly, subsequently placed in a molding frame with dimensions of 160 mm × 130 mm × 3 mm, and press-molded at a temperature of 175°C under a pressure of 3.43 MPa (35 kgf/$cm^2$), thus preparing a measurement specimen. The number of colored particles within this specimen was measured by visual inspection.

The results of the above measurements are shown in Table 6. In the same manner as described for Table 5, for the condensation product (A) used in each of the tests, Table 6 also details whether the use of a product with a weight average molecular weight of 5,000 or less was present or absent, whether the addition of a reducing agent to the reaction system prior to synthesis was present or absent, whether the use of an organic solvent of the above general formula (1) as the solvent medium was present or absent, and whether the joint use of the auxiliary agent (C) was present or absent. ("O" represents the presence thereof, whereas no symbol represents the absence thereof.)

[Table 5]

| Test No. | Coating liquid No. | Total number of batches | Amount of scale adhesion ($g/m^2$) | | | | Amount of scale trapped on filter (g) | Thickness of residual scale preventive coating (mm) | Mw of 5,000 or less | Addition of reducing agent prior to reaction | Solvent of formula (1) | Auxiliary agent (C) |
|---|---|---|---|---|---|---|---|---|---|---|---|---|
| | | | Liquid phase section | Vicinity of Gas-liquid interface | Stirring blades | Baffle | | | | | | |
| 101 | 101 | 1000 | 0 | 4 | 18 | 15 | 18 | 0.1 | O | | | |
| 102* | 102* | 200 | 2 | 89 | 102 | 110 | 280 | 0.4 | O | | | |
| 103 | 103 | 1000 | 0 | 4 | 15 | 16 | 21 | 0.1 | O | | | |
| 104 | 104 | 1000 | 0 | 5 | 21 | 13 | 17 | 0.1 | O | | | |
| 105 | 105 | 1000 | 0 | 5 | 23 | 14 | 18 | 0.1 | O | O | | |
| 106 | 106 | 1000 | 0 | 8 | 21 | 16 | 23 | 0.1 | O | O | | |
| 107 | 107 | 1000 | 0 | 6 | 18 | 11 | 15 | 0.1 | O | | O | |
| 108 | 108 | 1000 | 0 | 8 | 16 | 12 | 16 | 0.1 | O | O | O | |
| 109 | 109 | 1000 | 0 | 4 | 15 | 18 | 14 | 0.1 | O | | | |
| 110 | 110 | 1000 | 0 | 6 | 18 | 21 | 19 | 0.1 | O | O | | |
| 111 | 111 | 1000 | 0 | 9 | 35 | 28 | 38 | 0.1 | | | O | |
| 112 | 112 | 1000 | 0 | 6 | 12 | 18 | 15 | 0.1 | O | O | O | |
| 113 | 113 | 1000 | 0 | 2 | 3 | 6 | 9 | 0.05 | O | | | O |
| 114 | 114 | 1000 | 0 | 3 | 2 | 4 | 8 | 0.05 | O | O | | O |
| 115 | 115 | 1000 | 0 | 3 | 2 | 4 | 8 | 0.05 | O | O | | O |
| 116 | 116 | 1000 | 0 | 2 | 2 | 5 | 9 | 0.05 | O | | O | O |
| 117 | 117 | 1000 | 0 | 3 | 2 | 4 | 5 | 0.05 | O | O | O | O |
| 118 | 118 | 1000 | 0 | 3 | 4 | 6 | 9 | 0.05 | O | | | O |
| 119 | 119 | 1000 | 0 | 2 | 2 | 4 | 7 | 0.05 | O | O | | O |

*: Comparative example

[Table 6]

| Test No. | Fish eyes (number) | Luminosity index (L value) | Colored particles (number) | Mw of 5,000 or less | Addition of reducing agent prior to reaction | Solvent of formula (1) | Auxiliary agent (C) |
|---|---|---|---|---|---|---|---|
| 101 | 10 | 73.0 | 12 | O | | | |
| 102* | 64 | 72.0 | 77 | O | | | |
| 103 | 14 | 73.0 | 15 | O | | | |
| 104 | 15 | 73.0 | 13 | O | | | |
| 105 | 17 | 73.0 | 15 | O | O | | |
| 106 | 16 | 73.0 | 16 | O | O | | |
| 107 | 19 | 73.0 | 12 | O | | O | |
| 108 | 17 | 73.0 | 14 | O | O | O | |
| 109 | 18 | 73.0 | 15 | O | | | |
| 110 | 16 | 73.0 | 14 | O | O | | |
| 111 | 27 | 73.0 | 23 | | | O | |
| 112 | 18 | 73.0 | 16 | O | O | O | |
| 113 | 4 | 73.0 | 3 | O | | | O |
| 114 | 3 | 73.0 | 2 | O | O | | O |
| 115 | 3 | 73.0 | 2 | O | O | | O |
| 116 | 3 | 73.0 | 3 | O | | O | O |
| 117 | 2 | 73.0 | 2 | O | O | O | O |
| 118 | 4 | 73.0 | 3 | O | | | O |
| 119 | 2 | 73.0 | 3 | O | O | | O |

*: Comparative example

[Evaluations]

As is evident from the results listed in Table 5, in the test No. 101 and No. 103 to No. 119, in which a scale preventive coating was formed on the inner wall surfaces and the like of the polymerization vessel with a single-stage application using a scale preventive agent of the present invention comprising the components (A) and (B) described above, even when a multitude of polymerization batches of up to 1,000 batches were repeated under high-temperature polymerization reaction conditions at 66°C, the amount of scale adhesion is extremely small in the vicinity of the gas-liquid interface inside the polymerization vessel, on the stirring blades, and on the baffle.

The amount of scale trapped on the filter 30 corresponds with the amount of detached scale which has been adhered to or accumulated on the inner wall surfaces and the like of the polymerization vessel. Even when looking at

the amounts of scale trapped by the filter 30, it is evident that the effect of the scale preventive agent of the present invention in preventing the adhesion of scale to the inner wall surfaces and the like of the polymerization vessel is remarkably superior. Moreover, based on the results listed in Table 6, it is evident that in those cases where a scale preventive agent of the present invention is used, the number of fish eyes or colored particles, which are assumed to be caused by the detachment of the scale preventive coating, is minimal, and a polymer product can be obtained that displays absolutely no problems in terms of quality such as the anti-initial discoloration.

In contrast, the comparative example that used the coating liquid No. 102* using no auxiliary agent (B) exhibited an inferior scale prevention effect, and the obtained polymer product was of clearly inferior quality.
Moreover, it has been shown that using a condensation product (A) with a weight average molecular weight of 5,000 or less, using a condensation product (A) obtained by adding a reducing agent to the reaction system prior to synthesis, using a condensation product (A) obtained by using an organic solvent of the above general formula (1) as the solvent medium during synthesis, and jointly using an auxiliary agent (C), each yield an improvement in the scale prevention effect and improvements in the quality such as the number of fish eyes or colored particles within the product and the anti-initial discoloration property. Moreover, it has been also shown that a combination of two or more of these factors synergistically yields even larger improvements in such effects.

## Claims

1. A polymer scale adhesion preventive agent for use in a polymerization of a monomer having an ethylenic double bond, the polymer scale adhesion preventive agent comprising:

   (A) a condensation reaction product of an aldehyde compound and a hydroxynaphthalene-based compound, and
   (B) (B1) an organophosphoric acid compound, or (B2) an inorganic phosphoric acid compound having 3 or more phosphorus atoms, or a combination thereof.

2. The polymer scale adhesion preventive agent according to claim 1, wherein the condensation reaction product of component (A) is obtained by conducting a condensation reaction of the aldehyde compound and the hydroxynaphthalene-based compound in presence of an organic solvent comprising a compound represented by a general formula (1) shown below:

[Chemical Formula 1]

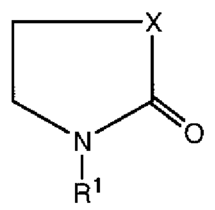

(1)

wherein $R^1$ represents an alkyl group of 1 to 3 carbon atoms, and X represents a methylene group ($-CH_2-$) or a divalent group represented by a formula: $-NR^2-$, wherein $R^2$ represents an alkyl group of 1 to 3 carbon atoms.

3. The polymer scale adhesion preventive agent according to claim 1, wherein the condensation reaction product of component (A) is obtained by adding a reducing agent to the reaction system during at least one stage amongst prior to commencement of the condensation reaction and during the condensation reaction.

4. The polymer scale adhesion preventive agent according to claim 1, wherein a weight average molecular weight of the condensation reaction product of component (A) is not more than 10,000.

5. The polymer scale adhesion preventive agent according to claim 1, wherein the organophosphoric acid compound of component (B1) is at least one selected from the group consisting of lecithin, phytic acid, nucleic acid, and salts thereof.

6. The polymer scale adhesion preventive agent according to claim 1, wherein the inorganic phosphoric acid compound

having 3 or more phosphorus atoms of component (B2) is at least one selected from the group consisting of tripolyphosphoric acid, polyphosphoric acids having 4 or more phosphorus atoms, and salts thereof.

**7.** The polymer scale adhesion preventive agent according to claim 1, further comprising:

(C) (C1) a blue water-soluble dye, or (C2) a black water-soluble dye, or a combination thereof.

**8.** The polymer scale adhesion preventive agent according to claim 7, wherein the blue water-soluble dye of component (C1) is at least one selected from the group consisting of blue water-soluble azo dyes; blue water-soluble anthraquinone dyes; blue water-soluble indigoid dyes; blue water-soluble triphenylmethane dyes; and blue water-soluble azine dyes.

**9.** The polymer scale adhesion preventive agent according to claim 7, wherein the black water-soluble dye of component (C2) is at least one selected from the group consisting of black water-soluble azo dyes; black water-soluble anthraquinone dyes; black water-soluble indigoid dyes; black water-soluble triphenylmethane dyes; and black water-soluble azine dyes.

**10.** The polymer scale adhesion preventive agent according to claim 1, further comprising a solvent and existing in liquid form, the polymer scale adhesion preventive agent whose solid fraction content is within a range from 2 to 25% by mass in total and whose pH is 7.5 or higher.

**11.** A method of producing a polymer of a monomer having an ethylenic unsaturated double bond, the method in which the monomer is polymerized inside a polymerization vessel having a scale preventive coating formed on an inner wall surface and on portions that contact the monomer during polymerization, wherein
the scale preventive coating comprises a polymer scale adhesion preventive agent for use in a polymerization of a monomer having an ethylenic double bond, and the polymer scale adhesion preventive agent comprises:

(A) a condensation reaction product of an aldehyde compound and a hydroxynaphthalene-based compound, and
(B) (B1) an organophosphoric acid compound, or (B2) an inorganic phosphoric acid compound having 3 or more phosphorus atoms, or a combination thereof.

**12.** The method according to claim 11, wherein the scale preventive coating is formed by applying a coating liquid of the polymer scale adhesion preventive agent using steam as a carrier.

[Fig. 1]

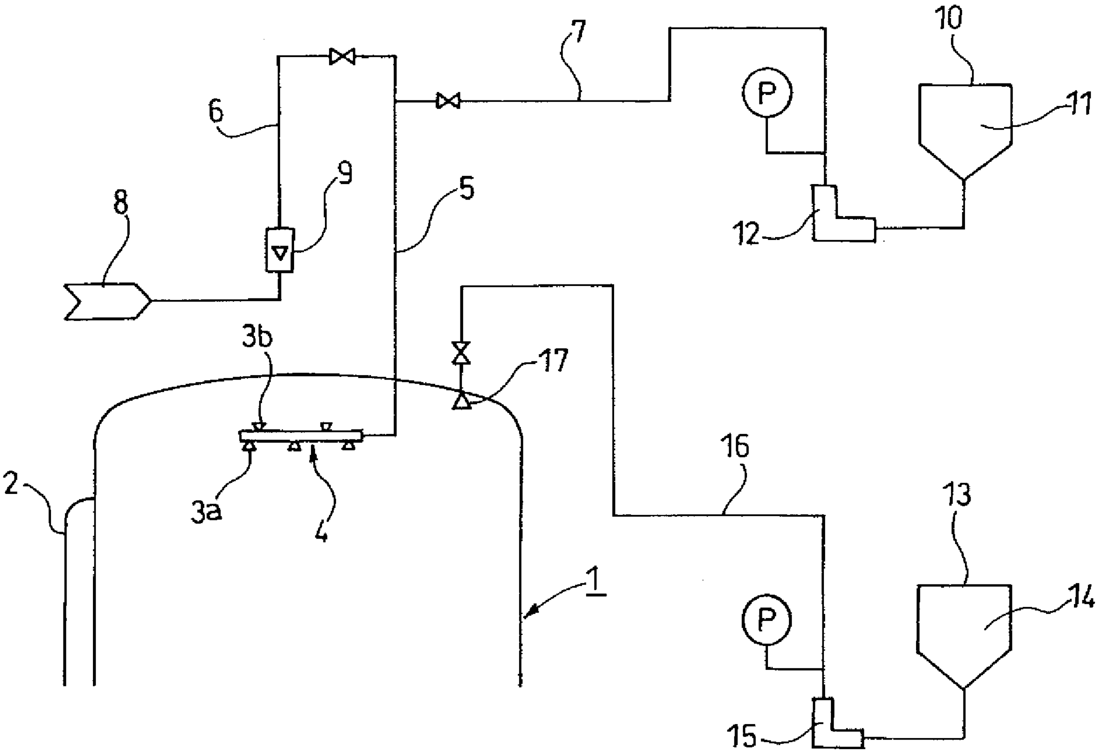

[Fig. 2]

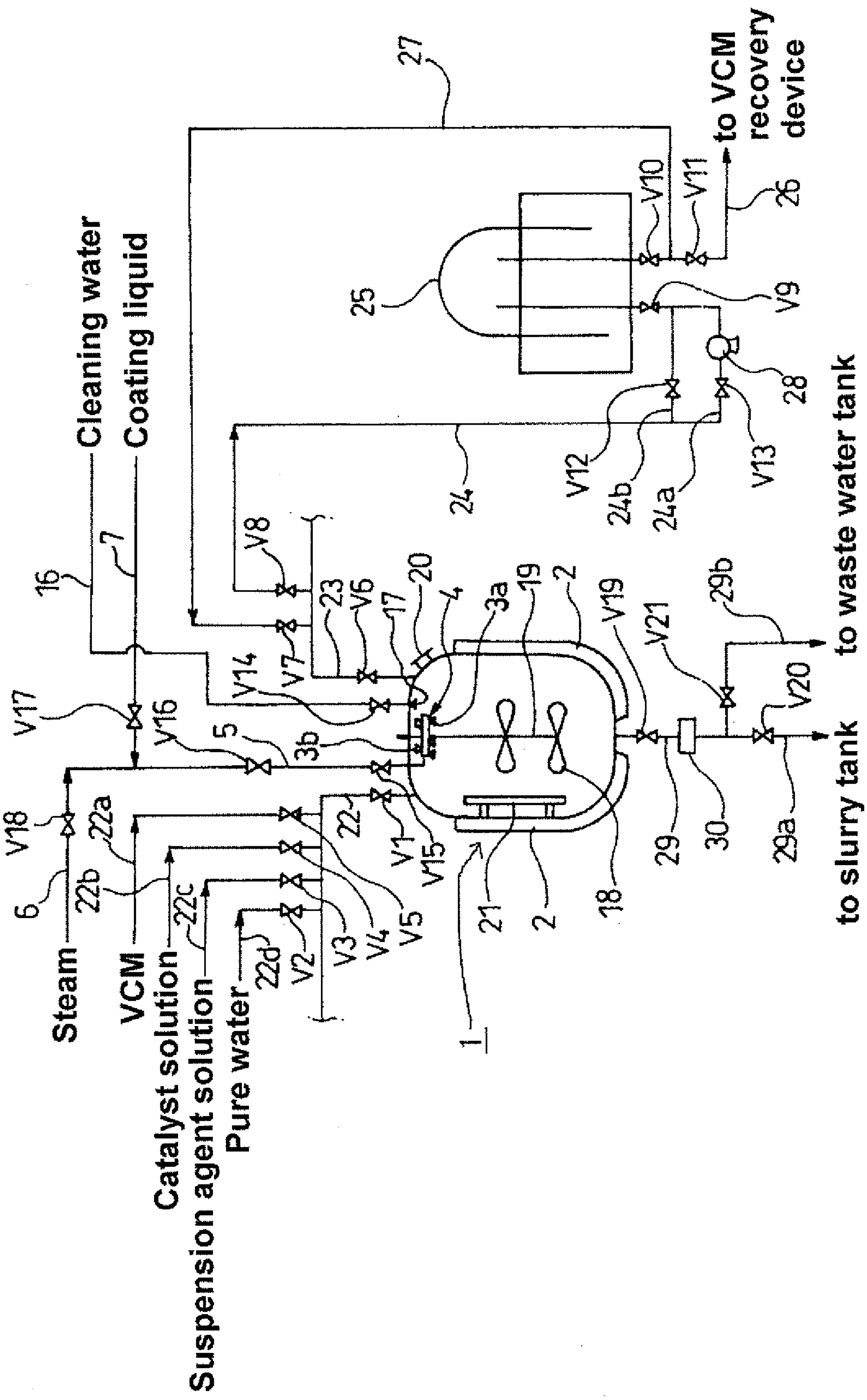
Cleaning water
Coating liquid
Steam
VCM
Catalyst solution
Suspension agent solution
Pure water
to VCM recovery device
to waste water tank
to slurry tank
1
2
3a
3b
4
5
6
7
16
17
18
19
20
21
22
22a
22b
22c
22d
23
24
24a
24b
25
26
27
28
29
29a
29b
30
V1
V2
V3
V4
V5
V6
V7
V8
V9
V10
V11
V12
V13
V14
V15
V16
V17
V18
V19
V20
V21

**INTERNATIONAL SEARCH REPORT**

International application No.
PCT/JP2009/050343

A. CLASSIFICATION OF SUBJECT MATTER
*C08F2/00*(2006.01)i, *C08G8/08*(2006.01)i

According to International Patent Classification (IPC) or to both national classification and IPC

B. FIELDS SEARCHED

Minimum documentation searched (classification system followed by classification symbols)
C08F2/00, C08G8/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-40002 A (Shin-Etsu Chemical Co., Ltd.), 13 February, 2001 (13.02.01), Claims; Par. Nos. [0060], [0078]; experiment No.120<br>& US 6362291 B1 & EP 1072614 A1<br>& HU 2995 D & PL 341754 A<br>& PT 1072614 T | 1,4-6,10-12<br>2 |
| Y | JP 2006-160960 A (Shin-Etsu Chemical Co., Ltd.), 22 June, 2006 (22.06.06), Claims; Par. No. [0017]<br>(Family: none) | 2 |
| Y | JP 2005-97601 A (Shin-Etsu Chemical Co., Ltd.), 14 April, 2005 (14.04.05), Claims; Par. No. [0017]<br>& US 2005/0054789 A1 & EP 1514878 A1 | 2 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 February, 2009 (13.02.09) | Date of mailing of the international search report<br>24 February, 2009 (24.02.09) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/050343

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-130803 A (Shin-Etsu Chemical Co., Ltd.), 18 May, 1999 (18.05.99), Claims; examples & US 6288177 B1 | 1-12 |
| A | JP 11-130802 A (Shin-Etsu Chemical Co., Ltd.), 18 May, 1999 (18.05.99), Claims; examples (Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI6206909 B
- JP HEI11506495 B
- JP HEI11511495 B